# FASCICULE DE BREVET EUROPEEN

(11) **EP 3 891 364 B1**
(45) Date de publication et mention de la délivrance du brevet: **25.01.2023**
(21) Numéro de dépôt: 19880956.8
(22) Date de dépôt: 03.12.2019
(51) Int. Cl.: F01D 11/24

(54) **PROCÉDÉ DE REFROIDISSEMENT D'UN CARTER DE TURBINE POUR UNE TURBOMACHINE**
VERFAHREN ZUR KÜHLUNG EINES TURBINENGEHÄUSES EINER TURBOMASCHINE
METHOD FOR COOLING A TURBINE CASING FOR A TURBOMACHINE

(30) Priorité: 07.12.2018 FR 1872479
(43) Date de publication de la demande: 13.10.2021
(73) Titulaire: SAFRAN AIRCRAFT ENGINES, 75015 Paris (FR)
(72) Inventeur: GIRARDEAU, Julian, Nicolas, 77550 MOISSY-CRAMAYEL (FR); ROTENBERG, Maxime, Aurélien, 77550 MOISSY-CRAMAYEL (FR)
(74) Mandataire: Ernest Gutmann - Yves Plasseraud S.A.S.
(86) Numéro de dépôt international: PCT/FR2019/000198
(87) Numéro de publication internationale: WO 2020/115374

(56) Documents cités:
- FR-A1- 2 867 806
- FR-A1- 2 999 226
- FR-A1- 3 002 971
- US-A1- 2013 084 162

## Description

### DOMAINE

La présente invention concerne la gestion d'un dispositif de refroidissement d'un carter de turbine pour une turbomachine, telle par exemple qu'un turboréacteur d'avion, en particulier un turboréacteur à double flux.

### CONTEXTE

Un turboréacteur à double flux comporte classiquement une soufflante en aval de laquelle s'étend :
- une veine primaire dans laquelle s'écoule un flux primaire, ladite veine primaire traversant notamment, dans le sens d'écoulement du flux primaire, un compresseur basse-pression, un compresseur haute-pression, une chambre de combustion, une turbine haute-pression et une turbine basse pression, la veine primaire étant délimitée extérieurement au niveau de la turbine par un carter de turbine,
- une veine secondaire dans laquelle s'écoule un flux secondaire distinct du flux primaire.

Le flux d'air primaire issu de la chambre de turbine présente une température élevée et échauffe les parties situées en aval. Afin d'éviter en fonctionnement des contacts entre les parties fixes et mobiles de la turbine en raison des dilatations différentielles, il est nécessaire de prévoir des moyens de refroidissement efficaces pouvant s'intégrer aisément dans l'environnement du turboréacteur et qui permettent de maîtriser ces dilatations différentielles en maîtrisant la température des pièces en fonctionnement.

Les termes amont et aval sont définis par rapport au sens de circulation des gaz au sein de la turbomachine. Les termes axial, radial et circonférentiel sont définis par rapport à l'axe de la turbomachine.

La demande de brevet FR 2 867 806, au nom de la Demanderesse, divulgue un dispositif de refroidissement d'un carter de turbine pour une turbomachine comportant des moyens de prélèvement et d'amenée d'air et des moyens de distribution de l'air prélevé comprenant des rampes s'étendant circonférentiellement autour de l'axe de la turbomachine. Les rampes sont reliées aux moyens de prélèvement et d'amenée d'air par des zones de liaison. Chaque rampe comporte des orifices répartis le long de la rampe, l'air prélevé étant destiné à s'échapper desdits orifices pour refroidir le carter.

Les orifices peuvent être uniformément répartis le long de chaque rampe de façon à avoir un débit relativement uniforme sur toute la circonférence du carter.

Par ailleurs, le rotor de la turbine comporte des aubes dont les extrémités radialement externes coopèrent avec un ou plusieurs anneaux en matériau abradable en fonctionnement.

Il a été constaté qu'en fonctionnement le rotor est soumis à des excentrations ou des excursions dans le plan radial, notamment, le rotor peut subir de fortes accélérations lors de ces excursions ce qui conduit à la formation d'usures circonférentiellement localisées des anneaux en matériau abradable, pénalisant ainsi le rendement de la turbomachine. En d'autres termes, de telles usures s'étendent sur une portion angulaire seulement de la turbomachine et ne sont pas annulaires.

Il existe actuellement un besoin de pouvoir compenser localement de telles usures. Le document FR 3 002 971 divulgue un dispositif de refroidissement d'un carter de turbine d'une turbomachine comportant des vannes commandées pour chaque rampe de refroidissement afin d'adapter le refroidissement du carter localement en fonction du régime de la machine et des circonstances de fonctionnement, et ainsi atténuer les défauts de circularité du carter.

### RESUME DE L'INVENTION

L'invention a notamment pour but d'apporter une solution simple, efficace et économique à ce problème.

A cet effet, elle propose un procédé de gestion d'un dispositif de refroidissement d'un carter de turbine d'un turboréacteur d'aéronef à double flux selon la revendication 1, le dispositif de refroidissement s'étendant autour d'un axe et comportant des moyens de distribution d'air configurés pour prélever de l'air et l'acheminer vers le carter, les moyens de distribution d'air comprenant au moins une première rampe et une deuxième rampe s'étendant circonférentiellement autour de l'axe, respectivement sur une première portion circonférentielle et sur une seconde portion circonférentielle différentes l'une de l'autre, chaque rampe comportant des orifices d'éjection d'air destinés à être orientés vers le carter pour le refroidir, et comportant des moyens de réglage aptes à régler le débit d'air éjecté au niveau de la première rampe par rapport au débit d'air éjecté au niveau de la seconde rampe.

De cette manière, il est possible d'adapter le refroidissement du carter, et donc la contraction de celui-ci, sur des portions circonférentielles différentes du carter. Le jeu entre les extrémités des aubes et les anneaux en matériau abradable peut donc être modifié localement par contraction du carter dans la zone visée, en augmentant ou réduisant localement, sur une portion circonférentielle du carter déterminée, le refroidissement du carter.

Les moyens de réglage peuvent comporter des moyens de réduction de la section de passage de l'air disposés dans les moyens de distribution d'air.

Le dispositif peut comporter au moins un premier collecteur et un deuxième collecteur, reliés aux moyens de distribution d'air par l'intermédiaire respectivement d'une première branche et d'une deuxième branche s'étendant circonférentiellement chacune dans une direction opposée, la première rampe et la seconde rampe s'étendant circonférentiellement respectivement depuis le premier collecteur et depuis le deuxième collecteur.

Les deux collecteurs sont ainsi écartés circonférentiellement l'un par rapport à l'autre.

Les moyens de réduction de la section peuvent être aptes à régler la section de la première branche et/ou de la seconde branche, de manière à régler le débit d'air dans chacune des branches.

Chaque branche peut comporter une première extrémité reliée aux moyens de prélèvement et d'amenée d'air et une seconde extrémité reliée au collecteur correspondant, les moyens de réduction de la section étant situés au niveau de la première extrémité et/ou de la seconde extrémité de la branche correspondante. Les moyens de réduction de la section peuvent également être situés au niveau d'une zone médiane de la branche correspondante.

Les moyens de réduction de la section peuvent être aptes à régler la section de la première rampe et/ou de la seconde rampe, au niveau de la zone de jonction entre ladite rampe et le collecteur.

En particulier, les moyens de réduction de la section sont dans ce cas situés en amont des orifices d'éjection de la rampe correspondante. Les termes amont et aval sont utilisés en référence à la direction générale du flux d'air de refroidissement circulant dans le dispositif de refroidissement.

Les moyens de réduction de la section peuvent comporter au moins un registre ou diaphragme réglable.

Ledit registre réglable peut être un registre à iris. La structure d'un tel registre est déjà connue en soi.

Le dispositif peut comporter au moins une paire de premières rampes et au moins une paire de deuxièmes rampes, les rampes d'une même paire s'étendant circonférentiellement à l'opposé l'une de l'autre, depuis le collecteur correspondant. Le nombre de paires de rampes par collecteur peut être compris entre 2 et 10. Les premières et deuxièmes rampes peuvent couvrir une zone du carter s'étendant angulairement sur 360°. En d'autres termes, toute la surface externe annulaire du carter peut être refroidie par les rampes.

Le turboréacteur à double flux comporte une soufflante en aval de laquelle s'étend :
- une veine primaire dans laquelle s'écoule un flux primaire, ladite veine primaire traversant notamment, dans le sens d'écoulement du flux primaire, un compresseur, une chambre de combustion et une turbine comportant un carter de turbine,
- une veine secondaire dans laquelle s'écoule un flux secondaire distinct du flux primaire,
et comporte un dispositif de refroidissement du type précité, la rampe s'étendant circonférentiellement autour de l'axe du turboréacteur et étant située radialement à l'extérieur du carter de turbine, les orifices étant tournés en direction dudit carter de turbine, les moyens de prélèvement et d'amenée d'air étant aptes à prélever de l'air issu de la veine secondaire.

L'invention concerne un procédé de gestion d'un dispositif de refroidissement d'un carter de turbine d'un turboréacteur d'aéronef du type précité, comportant les étapes consistant à :
- relever suivant deux axes différents, par exemple deux axes orthogonaux, les accélérations subies par la cellule et/ou l'ensemble propulsif de l'aéronef,
- déterminer les excentrations subies par le rotor à partir des accélérations mesurées,
- régler les moyens de réglage de façon à adapter le débit d'air éjecté au niveau de la première rampe par rapport au débit d'air éjecté au niveau de la seconde rampe. On rappelle que la cellule d'un aéronef est constituée du fuselage, de la voilure, de l'empennage (stabilisateur horizontal et dérive) et du train d'atterrissage de l'aéronef. L'ensemble propulsif comporte la turbomachine ainsi que la nacelle entourant la turbomachine.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une vue en coupe axiale d'une partie d'un réacteur à double flux selon une forme de réalisation de l'invention,
- la figure 2 est une vue en perspective du dispositif de refroidissement selon l'invention,
- la figure 3 est une vue en perspective d'un registre à iris,
- la figure 4 est une vue en perspective, de détail, illustrant une autre forme de réalisation du dispositif selon l'invention.

### DESCRIPTION DETAILLEE

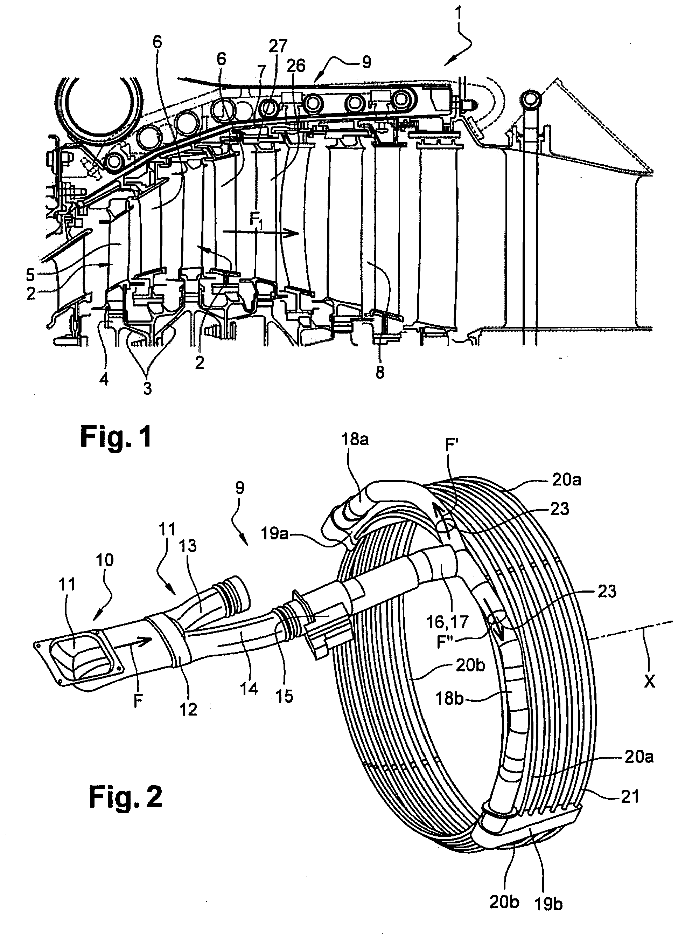

La figure 1 illustre une partie d'un turboréacteur à double flux selon l'invention, en particulier la turbine basse pression 1. Celle-ci comporte un rotor comportant des roues 2 assemblées axialement les unes aux autres par des brides annulaires 3 et comportant chacune un disque 4 portant des aubes 5.

Entre les roues mobiles 2 se trouvent des rangées annulaires d'aubes fixes 6 qui sont montées par des moyens appropriés à leurs extrémités radialement externes sur un carter 7 de la turbine basse-pression 1. Les aubes fixes 6 de chaque rangée sont réunies entre elles à leurs extrémités radialement internes par des secteurs annulaires placés circonférentiellement bout à bout.

Comme indiqué précédemment, le flux d'air primaire F1 issu de la chambre de combustion et s'écoulant dans la veine primaire 8 échauffe le carter 7.

Afin d'assurer le refroidissement du carter 7, le turboréacteur comporte un dispositif de refroidissement 9, mieux visible à la figure 2.

Celui-ci comporte des moyens de prélèvement et d'amenée d'air comprenant :
- une écope 10 comprenant une ouverture 11 débouchant par exemple dans la veine secondaire du turboréacteur afin d'y prélever de l'air froid,
- un organe de raccordement 11 présentant une forme générale de Y comprenant une partie amont 12 raccordé à l'écope 10, et une partie aval comprenant une première branche 13 dont la fonction ne sera pas détaillée ici, et une seconde branche 14,

- une vanne de régulation 15 montée en aval de la seconde branche 14 et apte à être commandée en fonction du régime moteur et/ou des conditions de vol par exemple, de manière à ajuster le débit prélevé,
- un organe de distribution 16 formé d'une ou plusieurs pièces et comportant une partie amont 17 raccordée en sortie de la vanne de régulation 15, et au moins deux branches aval 18a et 18b s'étendant circonférentiellement autour de l'axe du turboréacteur, de part et d'autre de l'extrémité aval de la partie amont 17. Chaque branche 18a, 18b s'étend par exemple sur environ 90°.

Le dispositif 9 comporte en outre des collecteurs ou zones de liaison 19a, 19b, ici au nombre de deux, raccordées aux extrémités correspondantes des branches 18a, 18b, chaque collecteur 19a, 19b formant un canal s'étendant axialement.

Bien entendu, le nombre de collecteurs 19a, 19b peut varier, et peut par exemple être égal à quatre.

Le flux de refroidissement au travers des moyens de prélèvement et d'amenée d'air est illustré par des flèches à la figure 2 (référencées F au niveau de l'écope 10 et F', F" au niveau respectivement des branches 18a, 18b).

Le dispositif 9 comporte de plus des rampes 20a, 20b (ou plus généralement notée 20) formées par des canalisations courbes de section circulaire, chaque rampe 20a, 20b s'étend circonférentiellement selon un angle d'environ 90°, plus précisément de l'ordre de 90° ici.

Chaque rampe 20 comporte une extrémité proximale 21 débouchant dans le canal du collecteur correspondant 19 et une extrémité distale 22 fermée. Chaque rampe 20 comporte en outre des orifices tournés vers le carter 7 de sorte que l'air prélevé au travers de l'écope 10, de l'organe 11, de la vanne 15 et de l'organe de distribution 16, pénètre dans les collecteurs 19a, 19b puis dans les rampes 20 avant de déboucher par les orifices en regard du carter 7, de manière à le refroidir.

Les deux collecteurs 19a, 19b sont diamétralement opposés, chaque collecteur 19a, 19b étant associé à plusieurs paires de rampes 20, à savoir des rampes 20a s'étendant circonférentiellement d'un côté et des rampes 20b s'étendant circonférentiellement du côté opposé. Ainsi, chaque collecteur 19a, 19b et les rampes opposées associées 20a, 20b couvrent une plage angulaire d'environ 180°.

Dans la forme de réalisation représentée aux figures, chaque collecteur 19a, 19b est associé à plusieurs paires de rampes, par exemple neuf paires de rampes 20a, 20b. Les rampes 20a, 20b d'une même paire sont situées sur un même plan radial, les rampes 20a, 20b de paires différentes étant décalées les unes des autres selon l'axe X de la turbomachine, comme cela est visible à la figure 2.

Les deux collecteurs 19a, 19b et les paires de rampes 20 associées présentent des structures sensiblement identiques et sont agencés de façon diamétralement opposée.

De cette manière, les rampes 20 sont situées sur plusieurs plans radiaux décalés axialement l'un de l'autre, les rampes 20 d'un même plan radial formant un anneau de refroidissement entourant le carter 7 qui s'étend sensiblement sur toute la périphérie du carter c'est-à-dire sensiblement à 360°.

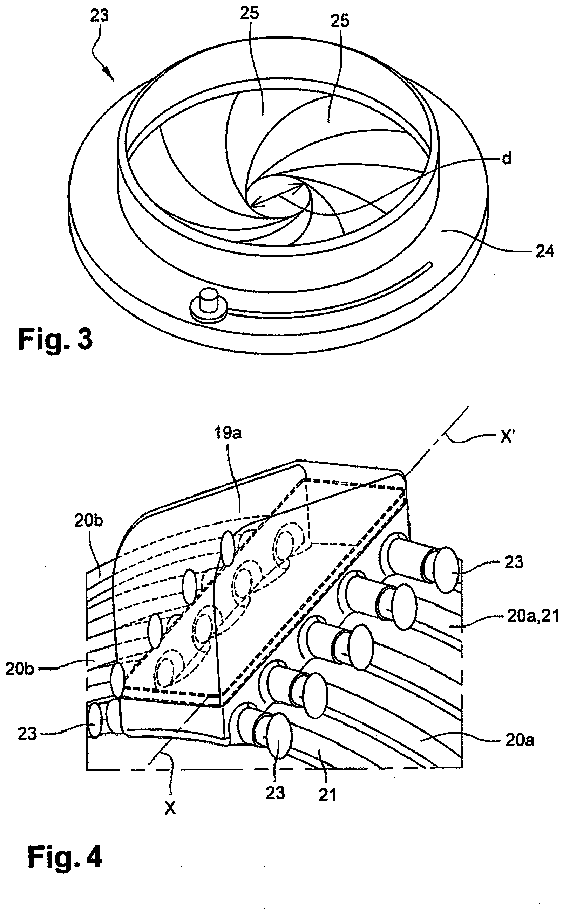

L'une au moins des branches 18a, 18b, ou chacune desdites banches 18a, 18b peut comporter des moyens de réglage de la section de la branche correspondante, par exemple sous la forme d'un registre à iris 23, dont la structure est représentée à la figure 3. Un tel registre 23 comporte une bague de fixation 24 et des lamelles mobiles 25 dont la position peut être modifiée de façon à régler le diamètre interne d du registre 23, délimité par les lamelles 25.

La position d'un tel registre 23 dans chacune des branches 18a, 18b est représenté schématiquement à la figure 2. Chaque registre 23 peut être situé à proximité de l'extrémité de la branche correspondante 18a, 18b reliée à partie amont 17, ou à proximité de l'extrémité de la branche correspondante 18a, 18b reliée au collecteur 19a, 19b correspondant, par exemple.

Chaque registre 23 peut également être situé dans une zone médiane de la branche 18a, 18b correspondante.

Selon une autre forme de réalisation illustrée schématiquement à la figure 4, des moyens de réglage de la section 23 peuvent équiper les rampes 20a, 20b, au niveau de leurs extrémités 21 reliées au collecteur 19a, 19b correspondant. Comme précédemment, de tels moyens de réglage de la section peuvent être formés par des registres à iris 23.

De tels moyens de réglage 23 permettent d'adapter le débit d'air éjecté au niveau des rampes 20 reliées au collecteur 19a, par rapport au débit d'air éjecté au niveau des rampes 20 reliées au collecteur 19b. Il est donc possible de refroidir deux zones circonférentielle du carter 7 de manière différenciée l'une par rapport à l'autre. Ceci permet par exemple de contracter localement le carter 7 dans une zone circonférentielle choisie afin de limiter le jeu entre les aubes 26 (figure 1) du rotor et les anneaux d'abradable 27 supportés par le carter 7, par exemple.

Le débit global peut également être ajusté à l'aide de la vanne de régulation 15.

La forme de réalisation de la figure 4 permet de maîtriser axialement la compensation d'usure. En effet, pour une même sollicitation, il apparaît que l'excentration du rotor (et donc l'usure engendrée) n'est pas uniforme axialement. En disposant des moyens de réglages en aval du collecteur 19a, 19b de façon à pouvoir ajuster le débit d'air de refroidissement individuellement dans chacune des rampes 20, il est possible de compenser le jeu au plus juste et selon les besoins, et donc de limiter la consommation de débit de refroidissement qui pénalise la performance de la turbomachine.

En fonctionnement, dans le cas d'une turbomachine présentant une usure faible des anneaux d'abradable 27, les sections des branches 18a, 18b ou des rampes 20 sont réduites ou bridées à l'aide des moyens de réglage de la section 23 précités. Au fur et à mesure qu'une usure est constatée et qu'un jeu apparaît localement entre les extrémités des aubes 26 du rotor et les anneaux d'abradable 27 correspondants, certaines des rampes 20 peuvent être alimentées avec un débit d'air plus important, en augmentant la section des rampes 20 ou des branches 18a, 18b concernées. L'augmentation du débit d'air de refroidissement provoque une contraction locale du carter 7 et réduit localement le jeu précité, ce qui permet de retrouver des performances de la turbomachine proche des performances nominales à l'état neuf de la turbomachine.

La vérification du jeu peut être réalisée au moment d'une période de maintenance, par exemple toutes les 500 à 1000 heures de vol. Les sections des branches 20 ou des rampes 18a, 18b peuvent alors être adaptées en conséquence.

Le jeu local précité peut être calculé sur la base de mesures d'excentration du rotor obtenues à l'aide d'accéléromètres ou de capteurs de jeu spécifiques, situés au niveau de la cellule et/ou de l'ensemble propulsif de l'aéronef.

## Revendications

1. Procédé de gestion d'un dispositif de refroidissement (9) d'un carter (7) de turbine d'un turboréacteur d'aéronef à double flux s'étendant selon un axe (X), le turboréacteur comportant une soufflante en aval de laquelle s'étend, un compresseur, une chambre de combustion et une turbine (1) comportant un carter de turbine (7):
- une veine primaire (8) dans laquelle s'écoule un flux primaire (F1), ladite veine primaire (8) traversant notamment, dans le sens d'écoulement du flux primaire (F1), le compresseur, la chambre de combustion et la turbine (1) comportant un carter de turbine (7),
- une veine secondaire dans laquelle s'écoule un flux secondaire issu de la soufflante et distinct du flux primaire, la veine secondaire s'étendant autour de la veine primaire,
le turboréacteur comportant un dispositif de refroidissement (9) d'un carter (7) de turbine du turboréacteur, ledit dispositif de refroidissement (9) comportant des moyens de distribution d'air configurés pour prélever de l'air et l'acheminer vers le carter, les moyens de distribution d'air comprenant au moins une première rampe (20a, 20b) et une deuxième rampe (20a, 20b) s'étendant circonférentiellement autour de l'axe (X), respectivement sur une première portion circonférentielle et sur une seconde portion circonférentielle différentes l'une de l'autre, chaque rampe (20a, 20b) comportant des orifices d'éjection d'air destinés à être orientés vers le carter pour le refroidir, le dispositif de refroidissement (9) comportant des moyens de réglage (23) aptes à régler le débit d'air éjecté au niveau de la première rampe (20a, 20b) par rapport au débit d'air éjecté au niveau de la seconde rampe (20a, 20b),
chaque rampe (20a, 20b) s'étendant circonférentiellement autour de l'axe (X) du turboréacteur et étant située radialement à l'extérieur du carter de turbine (7), les orifices d'éjection d'air des rampes (20a, 20b) étant tournés en direction dudit carter de turbine (7), les moyens de prélèvement et d'amenée d'air étant aptes à prélever de l'air issu de la veine secondaire,
le procédé comportant les étapes consistant à :
- relever suivant deux axes différents, par exemple deux axes orthogonaux, les accélérations subies par la cellule et/ou l'ensemble propulsif de l'aéronef,
- déterminer les excentrations subies par le rotor à partir des accélérations mesurées,
- régler les moyens de réglage (23) de façon à adapter le débit d'air éjecté au niveau de la première rampe (20a, 20b) par rapport au débit d'air éjecté au niveau de la seconde rampe (20a, 20b).

2. Procédé selon la revendication 1, **caractérisé en ce que** les moyens de réglage comportent des moyens (23) de réduction de la section de passage de l'air disposés dans les moyens de distribution d'air.

3. Procédé selon la revendication 1 ou 2, **caractérisé en ce que** le dispositif de refroidissement (9) comporte au moins un premier collecteur (19a) et un deuxième collecteur (19b), reliés aux moyens de distribution d'air par l'intermédiaire respectivement d'une première branche (18a) et d'une deuxième branche (18b) s'étendant circonférentiellement chacune dans une direction opposée, la première rampe (20a, 20b) et la seconde rampe (20a, 20b) s'étendant circonférentiellement respectivement depuis le premier collecteur (19a) et depuis le deuxième collecteur (19b).

4. Procédé selon les revendications 2 et 3 prises en combinaison, **caractérisé en ce que** les moyens de réduction de la section (23) sont aptes à régler la section de la première branche (18a) et/ou de la seconde branche (18b).

5. Procédé l'une des revendications 2 à 4, **caractérisé en ce que** les moyens de réduction de la section (23) sont aptes à régler la section de la première rampe (20a, 20b) et/ou de la seconde rampe (20a, 20b), au niveau de la zone de jonction (21) entre ladite rampe (20a, 20b) et le collecteur (9a, 9b).

6. Procédé selon l'une des revendications 2 à 5, **caractérisé en ce que** les moyens de réduction de la section comportent au moins un registre réglable (23).

7. Procédé selon la revendication 6, **caractérisé en ce que** ledit registre réglable est un registre à iris (23).

## Patentansprüche

1. Verfahren zur Steuerung einer Kühlvorrichtung (9) für ein Turbinengehäuse (7) eines Turbotriebwerks von Mantelstrom-Luftfahrzeugen, das sich entlang einer Achse (X) erstreckt, wobei das Turbotriebwerk ein Gebläse, einen Verdichter, eine Brennkammer und eine Turbine (1) mit einem Turbinengehäuse (7) enthält, wobei sich stromabwärts davon erstrecken:
- ein Primärströmungskanal (8), in dem ein Primärstrom (F1) strömt, wobei der Primärströmungskanal (8) in Strömungsrichtung des Primärstroms (F1) insbesondere den Verdichter, die Brennkammer und die Turbine (1) mit einem Turbinengehäuse (7) durchquert,
- ein Sekundärströmungskanal, in dem ein vom Gebläse ausgehender und vom Primärstrom verschiedener Sekundärstrom strömt, wobei sich der Sekundärströmungskanal um den Primärströmungskanal herum erstreckt,
wobei das Turbotriebwerk eine Kühlvorrichtung (9) für ein Turbinengehäuse (7) des Turbotriebwerks umfasst, wobei die Kühlvorrichtung (9) Luftverteilungsmittel enthält, die dazu ausgelegt sind, Luft zu entnehmen und dem Gehäuse zuzuführen, wobei die Luftverteilungsmittel zumindest eine erste Rampe (20a, 20b) und eine zweite Rampe (20a, 20b) umfassen, die sich in Umfangsrichtung um die Achse (X) jeweils über einen ersten Umfangsabschnitt bzw. einen zweiten Umfangsabschnitt erstrecken, die voneinander verschieden sind, wobei jede Rampe (20a, 20b) Luftausstoßöffnungen aufweist, die dazu bestimmt sind, auf das Gehäuse gerichtet zu werden, um dieses zu kühlen, wobei die Kühlvorrichtung (9) Einstellmittel (23) aufweist, die dazu geeignet sind, die im Bereich der ersten Rampe (20a, 20b) ausgestoßene Luftmenge in Bezug auf die im Bereich der zweiten Rampe (20a, 20b) ausgestoßene Luftmenge einzustellen,
wobei jede Rampe (20a, 20b) sich in Umfangsrichtung um die Achse (X) des Turbotriebwerks erstreckt und radial außerhalb des Turbinengehäuses (7) angeordnet ist, wobei die Luftausstoßöffnungen der Rampen (20a, 20b) in Richtung des Turbinengehäuses (7) gerichtet sind, wobei die Luftentnahme- und Zuführmittel dazu geeignet sind, Luft zu entnehmen, die aus dem Sekundärströmungskanal stammt,
wobei das Verfahren die folgenden Schritte umfasst:
- Erfassen von Beschleunigungen, denen die Zelle und/oder die Antriebseinheit des Luftfahrzeugs ausgesetzt sind, entlang zweier verschiedener Achsen, beispielsweise zweier orthogonaler Achsen,
- Ermitteln von Exzentrizitäten, denen der Rotor ausgesetzt ist, anhand der gemessenen Beschleunigungen,
- Einstellen der Einstellmittel (23) derart, dass die im Bereich der ersten Rampe (20a, 20b) ausgestoßene Luftmenge im Verhältnis zur im Bereich der zweiten Rampe (20a, 20b) ausgestoßenen Luftmenge angepasst wird.

2. Verfahren nach Anspruch 1,
**dadurch gekennzeichnet, dass** die Einstellmittel Mittel (23) zur Verringerung des Luftdurchlassquerschnitts umfassen, die in den Luftverteilungsmitteln angeordnet sind.

3. Verfahren nach Anspruch 1 oder 2,
**dadurch gekennzeichnet, dass** die Kühlvorrichtung (9) zumindest einen ersten Kollektor (19a) und einen zweiten Kollektor (19b) aufweist, die mit den Luftverteilungsmitteln über einen ersten Schenkel (18a) bzw. einen zweiten Schenkel (18b) verbunden sind, die sich umfangsseitig jeweils in entgegengesetzter Richtung erstrecken, wobei sich die erste Rampe (20a, 20b) und die zweite Rampe (20a, 20b) umfangsseitig jeweils vom ersten Kollektor (19a) bzw. vom zweiten Kollektor (19b) aus erstrecken.

4. Verfahren nach Anspruch 2 und 3 zusammengenommen,
**dadurch gekennzeichnet, dass** die Mittel zur Querschnittsverringerung (23) dazu geeignet sind, den Querschnitt des ersten Schenkels (18a) und/oder des zweiten Schenkels (18b) einzustellen.

5. Verfahren nach einem der Ansprüche 2 bis 4,
**dadurch gekennzeichnet, dass** die Mittel zur Querschnittsverringerung (23) dazu geeignet sind, den Querschnitt der ersten Rampe (20a, 20b) und/oder der zweiten Rampe (20a, 20b) an dem Verbindungsbereich (21) zwischen der Rampe (20a, 20b) und dem Kollektor (9a, 9b) einzustellen.

6. Verfahren nach einem der Ansprüche 2 bis 5,
**dadurch gekennzeichnet, dass** die Mittel zur Querschnittsverringerung zumindest eine einstellbare Blende (23) umfassen.

7. Verfahren nach Anspruch 6,
**dadurch gekennzeichnet, dass** es sich bei der einstellbaren Blende um eine Irisblende (23) handelt.

## Claims

1. A method for managing a cooling device (9) for a turbine casing (7) of a turbofan aircraft engine extending along an axis (X), the engine comprising a fan downstream of which extends a compressor, a combustion chamber and a turbine (1) comprising a turbine casing (7):
- a primary vein (8) in which a primary flow (F1) circulates, said primary vein (8) passing through, in particular, in the direction of circulation of the primary flow (F1), a compressor, a combustion chamber and the turbine (1) comprising a turbine casing (7),
- a secondary vein into which flows a secondary flow from the fan and distinct from the primary flow, the secondary vein extending around the primary vein,
the turbojet engine comprising a device (9) for cooling a turbine casing (7) of the turbine of the turbojet engine, said cooling device (9) comprising air-distribution means configured to take in air and convey it to the casing, the air-distribution means comprising at least a first ramp (20a, 20b) and a second ramp (20a, 20b) extending circumferentially about the axis (X) respectively on a first circumferential portion and on a second circumferential portion different from each other, each ramp (20a, 20b) comprising air ejection orifices intended to be directed towards the casing in order to cool it, the cooling device (9) comprising adjustment means (23) capable of adjusting the flow rate of air ejected at the first ramp (20a, 20b) with respect to the flow rate of air ejected at the second ramp (20a, 20b),
each ramp (20a, 20b) extending circumferentially about the axis (X) of the turbojet engine and being located radially outside the turbine casing (7), the air ejection orifices of the ramps (20a, 20b) being turned towards the said turbine casing (7), the air intake and supply means being capable of taking in air from the secondary vein,
the method comprising the steps of:
- logging along two different axes, for example two orthogonal axes, the accelerations experienced by the airframe and/or propulsion system of the aircraft,
- determining the eccentricity of the rotor from the measured accelerations,
- adjusting the adjusting means (23) so as to adapt the air flow rate ejected at the first ramp (20a, 20b) to the air flow rate ejected at the second ramp (20a, 20b).

2. A method according to claim 1, **characterized in that** the adjusting means comprise means (23) for reducing the air flow cross-section arranged in the air-distribution means.

3. A method according to claim 1 or 2, **characterized in that** the cooling device (9) comprises at least a first collector (19a) and a second collector (19b), connected to the air-distribution means via a first branch (18a) and a second branch (18b) respectively, each extending circumferentially in an opposite direction, the first collector (20a, 20b) and the second collector (20a, 20b) extending circumferentially from the first collector (19a) and the second collector (19b) respectively.

4. A method according to claims 2 and 3 in combination, **characterized in that** the means of reduction of the cross-section (23) are able to adjust the cross-section of the first branch (18a) and/or the second branch (18b).

5. A method according to one of claims 2 to 4, **characterized in that** the means of reduction of the cross-section (23) are able to adjust the cross-section of the first ramp (20a, 20b) and/or of the second ramp (20a, 20b), at the junction area (21) between said ramp (20a, 20b) and the collector (9a, 9b).

6. A method according to any of claims 2 to 5, **characterised in that** the means for reducing the cross-section comprises at least one adjustable damper (23).

7. A method according to claim 6, **characterised in that** said adjustable damper is an iris damper (23).
